# EUROPÄISCHE PATENTSCHRIFT

(11) **EP 1 967 437 B1**
(45) Veröffentlichungstag und Bekanntmachung des Hinweises auf die Patenterteilung: **15.09.2010**
(21) Anmeldenummer: 08152417.5
(22) Anmeldetag: 07.03.2008
(51) Int. Cl.: B62B 3/00, B62B 3/02, A47L 13/51

(54) **Zimmermädchenwagen mit verschließbaren Fächern bzw. verschließbarem Ablageboden**
Maid's trolley with closable compartments and closable draw base
Chariot de femme de chambre doté de compartiments verrouillables ou d'une base de dépôt verrouillable

(30) Priorität: 07.03.2007 DE 102007010937
(43) Veröffentlichungstag der Anmeldung: 10.09.2008
(73) Patentinhaber: Melchert, Franz Adolf, 42579 Heiligenhaus (DE)
(72) Erfinder: Melchert, Franz Adolf, 42579 Heiligenhaus (DE)
(74) Vertreter: Grundmann, Dirk

(56) Entgegenhaltungen:
- EP-A- 1 512 606
- DE-C1- 10 064 490
- DE-U1-202004 008 612
- FR-A- 2 367 456
- FR-A- 2 833 913
- GB-A- 2 281 880

## Beschreibung

Die Erfindung betrifft einen Zimmermädchenwagen gemäß Oberbegriff des Anspruches 1.

Ein derartiger Zimmermädchenwagen ist bekannt aus der FR 2833913. Dieser Zimmermädchenwagen besitzt einen Aufbau mit seitlichen Fächern, die mit Verschlusselementen verschließbar sind. Oberhalb der Fächer befindet sich ein in Vertikalrichtung zugänglicher Ablageboden für Kleinteile.

Die DE 8704682 U beschreibt ebenfalls einen Zimmermädchenwagen. Dieser besitzt einen kastenförmigen Aufbau mit zwei Seitenwänden und einer Rückwand. Die der Rückwand gegenüberliegende Seitenwandung des kastenförmigen Aufbaus ist frei. Von dieser Seite her sind im kastenförmigen Aufbau angeordnete Fächer in Horizontalrichtung zugänglich. In diesen Fächern lagert das Zimmermädchen Handtücher und Bettwäsche. Weitere für den Service erforderliche Kleinteile können auf einer auf der Oberseite des kastenförmigen Aufbaus angeordneten Fläche, die einen randumwandeten Ablageboden ausbildet, deponiert werden. Dort können die Getränke für die Minibar bzw. Seife und Duschgel bevorratet werden.

Der Zimmermädchenwagen wird von dem Zimmermädchen von Tür zu Tür gerollt. Während das Zimmermädchen das jeweilige Zimmer reinigt, bleibt der Zimmermädchenwagen in der Regel unbeaufsichtigt vor der Tür. Um zu vermeiden, dass in diesem unbeaufsichtigten Zustand Teile aus den Fächern bzw. vom Ablageboden in unerlaubter Weise entfernt werden, sieht die Erfindung vor, dass die Fächer und die Ablage gegen Zugriff mit einem Verschlusselement verschließbar sind.

Einen Transportwagen, bei dem seitliche Fächer mittels Flügeltüren verschließbar sind, zeigt die DE 19841781 C1. Die DE 2543771 beschreibt einen Schmutz- und Frischwäschetransportwagen, bei dem die Seitenwände von Gittern ausgebildet sind.

Aus der DE 202005013493 U1 ist ein kastenförmiger Transportwagen bekannt, bei dem die Seitenwände von Gittern gebildet sind. Der Transportwagen besitzt Fächer, die von einer Flügeltür verschlossen sind.

Die GB 2281880 beschreibt einen Transportwagen für Gartengeräte mit einem von oben zugänglichen Stauraum, der von einem Schwenkdeckel verschließbar ist.

Der Erfindung liegt die Aufgabe zugrunde, einen gattungsgemäßen Zimmermädchenwaren diebstahlsicherer auszugestalten. Gelöst wird die Aufgabe gemäß Anspruch 1 dadurch, dass das den Fächern zugeordnete Verschlusselement eine Schiebetür ist und ein weiteres Verschlusselement in Form einer in Vertikalrichtung verlagerbaren Haube vorgesehen ist, mit der Ablageboden gegen Zugriff verschließbar ist.

Bevorzugt werden die Haube und die Schiebetür von einem Gitter ausgebildet. Die Haube kann mit der Schiebetür verbunden sein. Mit der gitterförmigen Haube kann der Ablageboden abgedeckt werden. Die gitterförmige Schiebetür liegt in der Verschlussstellung vor den seitlich zugänglichen Fächern. In einer bevorzugten Ausgestaltung der Erfindung besitzt der kastenförmige Aufbau an zwei voneinander durch eine Breitseitenfläche beabstandeten Vertikalkanten in Vertikalrichtung sich erstreckende Schienen, die nach oben hin den Ablageboden überragen. Diese Schienen können aufeinander zu weisende Führungsnuten aufweisen. In diesen Führungsnuten können Rahmenschenkel der Schiebetür geführt sein. Die gitterförmige Haube kann fest mit der Oberseite der Schiebetür befestigt sein. Im heruntergelassenen Zustand liegt die Schiebetür vor den Fachöffnungen, so dass man dort nicht hineingreifen kann. Die Maschen des Gitters sind entsprechend eng gewählt. In dieser Stellung überfängt auch die Haube den Ablageboden, so dass dort keine Gegenstände entnommen werden können. Auch hier besitzt das Gitter eine entsprechend geringe Maschenweite. In einer Variante ist vorgesehen, dass die Haube elektromotorisch absenkbar bzw. elektromotorisch anhebbar ist. Hierzu besitzt der kastenförmige Aufbau einen Elektromotor, der beispielsweise über einen Seilzug oder ein Zahnstangengetriebe an der Schiebetür angreift. Die Schiebetür kann somit auf Knopfdruck herabgelassen bzw. angehoben werden. Gleichzeitig mit dem Anheben der Schiebetür bzw. mit deren Absenken wird die Haube verlagert. In einer weiteren Ausgestaltung besitzt der Zimmermädchenwagen einen Auslöser. Dieser kann beispielsweise betätigt werden, wenn ein Gegenstand entnommen oder hinzugefügt wird. In einer Variante der Erfindung ist es möglich, dass mit der Betätigung des Auslösers eine Zeitschaltuhr in Betrieb genommen wird. Nach Ablauf einer vorbestimmten Zeit kann sich die Schiebetür mit der daran befestigten Haube absenken. Um eine Einklemmgefahr zu vermeiden, können Sensoren vorgesehen sein. Die Haube und die Schiebetür können bevorzugt erst nach Eingabe eines Sicherungscodes angehoben werden. Das Anheben kann über Elektromotor erfolgen. Die Verwendung eines Elektromotors sowie einer Zeitschaltuhr erfordert das Vorhandensein einer Batterie. Zur Vermeidung dieser Anforderung kann das Öffnen der Schiebetür aber auch über eine vorgespannte Feder erfolgen, bspw. über eine Gasdruckfeder oder über einen Hydraulikzylinder. Eine derartige Hubfeder kann beim manuellen Schließen der Schiebetür gespannt werden.

Ein Ausführungsbeispiel der Erfindung werden nachfolgend anhand beigefügter Zeichnung erläutert. Es zeigen:
- Fig. 1: in perspektivischer Darstellung einen Zimmermädchenwagen im geöffneten Zustand;
- Fig. 2: das Ausführungsbeispiel in einer Draufsicht;

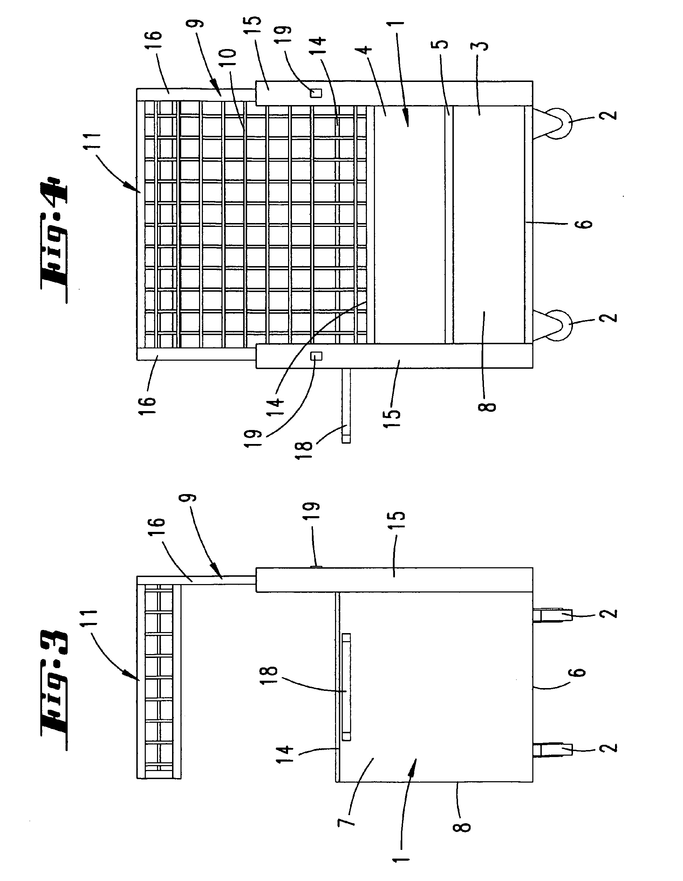

- Fig. 3: das Ausführungsbeispiel in einer Seitenansicht;
- Fig. 4: das Ausführungsbeispiel in einer Frontansicht und
- Fig. 5: eine Darstellung gemäß Fig. 1 im geschlossenen Zustand
- Fig. 6: ein zweites Ausführungsbeispiel der Erfindung in einer Darstellung gemäß Fig. 1,
- Fig. 7: das zweite Ausführungsbeispiel in einer Seitenansicht und
- Fig. 8: eine Darstellung gemäß Fig. 5 des zweiten Ausführungsbeispiels.

Der in den Zeichnungen dargestellte Zimmermädchenwagen entspricht im Wesentlichen demjenigen, wie er von der DE 8704682 U beschrieben wird. Der Zimmermädchenwagen besitzt einen im Wesentlichen kastenförmigen Aufbau 1. Dieser Aufbau 1 besitzt zwei sich gegenüberliegende Seitenwände 7, die eine kleinere Fläche einnehmen als die sich zwischen diesen Seitenwänden 7 erstreckende Rückwand 8. Die der Rückwand 8 gegenüberliegende Seite des kastenförmigen Aufbaus 1 ist offen. Der Boden 6 des Aufbaus 1 bildet ein unteres Fach 3. Ein sich parallel darüber erstreckender Zwischenboden 5 teilt den Korpus des kastenförmigen Aufbaus 1 in ein unteres Fach 3 und in ein oberes Fach 4.

Der kastenförmige Aufbau 1 besitzt darüber hinaus einen Deckel, der einen Ablageboden 13 ausbildet. Letzterer ist von einem Steg 14 umrandet.

Von einer oder von beiden Seitenwänden 7 können Haltebügel 18 für einen Abfallsack abragen.

Auf der Unterseite des kastenförmigen Aufbaus 1 befinden sich vier Laufrollen, mit denen der Zimmermädchenwagen bewegt werden kann.

Jeweils an den beiden Seiten der Fachöffnungen 3, 4, die in Horizontalrichtung zugänglich sind, befinden sich sich in Vertikalrichtung erstreckende Führungsschienen 15. Die Führungsschienen 15 überragen den Ablageboden 13. Die Führungsschienen 15 bilden Führungen in Form jeweils einer Führungsnut 17 aus. In dieser Führungsnut 17 ist ein Rahmenschenkel 16 einer Schiebetür 9 geführt. Die Türfläche der Schiebetür 9 wird von einem Gitter 10 ausgebildet. Die Führungsschiene 15 überragt den Ablageboden 13 um etwas mehr als die Hälfte der Höhe der Schiebetür 9.

Am oberen Rand der Schiebetür 9 ist eine als Drahtkäfig gebildete Haube 11 befestigt. Die Haube 11 ragt im Wesentlichen rechtwinklig, also in Horizontalrichtung von der oberen Randkante der Schiebetür 9 ab und besitzt eine Flächenerstreckung, die im Wesentlichen der Flächenerstreckung des Ablagebodens 13 entspricht. Die Haube 11 besteht im Wesentlichen aus einem engmaschigen Gitter 12, welches drei Seitenwandungen ausbildet. Die untere Seite der Seitenwandungen der Haube 11 bildet eine Randkante 11' aus, die in der Verschlussstellung auf der Randkante der Umrandung 14 des Ablagebodens 13 aufliegt. Hierdurch wird ein im Wesentlichen quaderförmiges mittels der Haube 11 verschlossenes Volumen gebildet, in dem Kleinteile aufbewahrt werden können. In den Fächern 3, 4, die unterhalb des Ablagebodens 13 angeordnet sind, können Handtücher und Bettwäsche untergebracht werden.

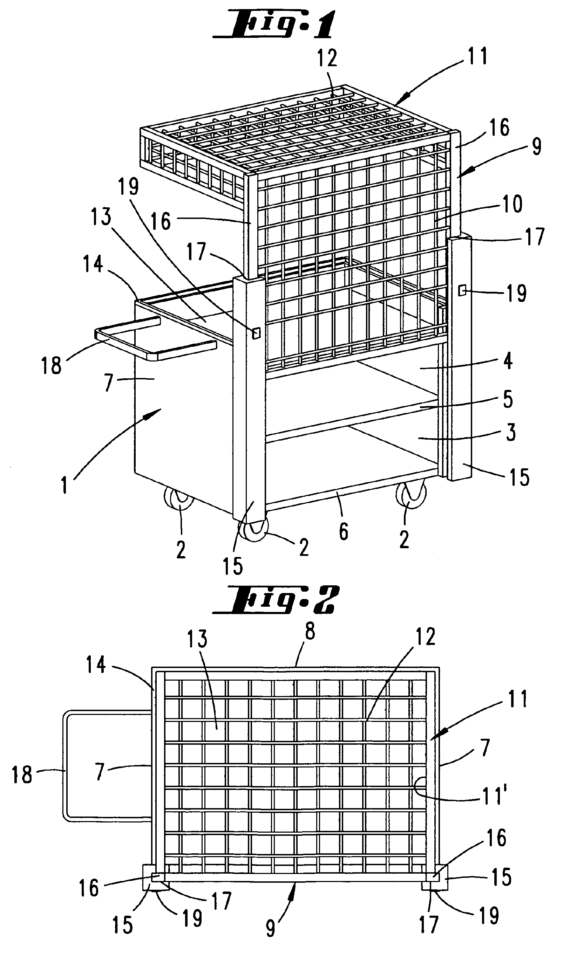

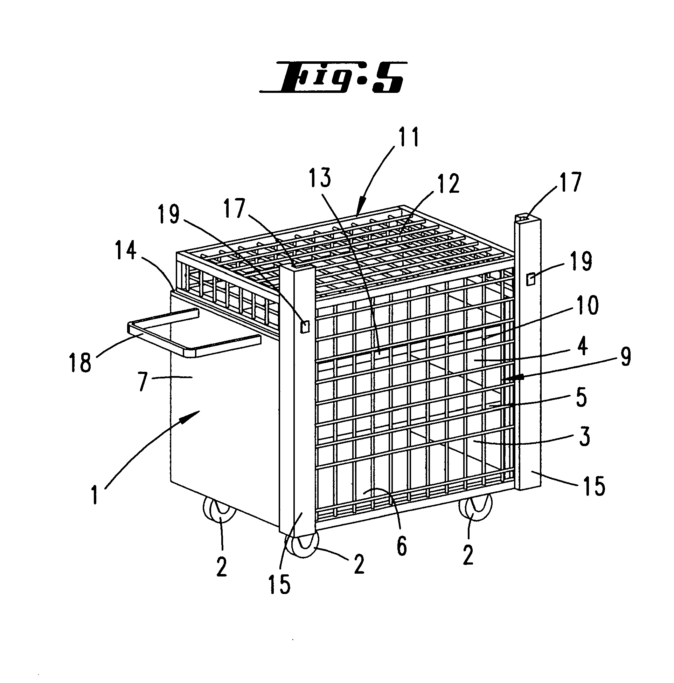

Ein in den Zeichnungen nicht dargestellter elektrischer Motor kann mittels eines nicht dargestellten Antriebsgetriebes die Schiebetür 9 mit der daran befestigten Haube 11 von der in Figur 5 dargestellten Geschlossenstellung in die in Figur 1 dargestellte Offenstellung anheben. In gleicher Weise kann der elektrische Motor die Schiebetür 9 mit angeformter Haube 11 auch wieder zurück in die in Figur 5 dargestellte Geschlossenstellung absenken. In der Geschlossenstellung ist lediglich der an einem Haltebügel 18 befestigte Abfallsack von außen zugänglich. Die Fächer 3, 4 sowie der Ablageboden 13 sind gegen Entnahme der dort bevorrateten Gegenstände verschlossen.

Zur Übertragung der Antriebskraft des nicht dargestellten Elektromotors auf die Schiebetür 9 kann ein Seilzuggetriebe oder ein Zahnstangengetriebe vorgesehen sein.

In einer bevorzugten Ausgestaltung besitzt der Zimmermädchenwagen einen Auslöser 19, der von einem Taster oder von einem Schalter gebildet sein kann. Im Ausführungsbeispiel sind mit der Bezugsziffer 19 zwei derartige Auslöser angeordnet. Diese befinden sich dort jeweils an den oberen Abschnitten der Führungsschiene 15. Wird ein derartiger Auslöser vom Zimmermädchen betätigt, so wird eine Zeituhr gestartet. Nach Ablauf einer vorbestimmten Zeit senkt sich die Schiebetür 9 bzw. die Haube 11 selbsttätig in die Verschlussstellung ab. Erst wenn über ein Codeeingabetableau, welches am Ort des Auslösers 19 angeordnet sein kann, ein Freigabecode eingegeben wird, hebt sich die Schiebetür 9 bzw. die Haube 11 wieder in die in Figur 1 dargestellte Offenstellung. Wird der Auslöser 19 vor Ablauf der voreingestellten Zeit betätigt, so wird die Zeituhr auf Null zurückgesetzt.

Es wird als besonders vorteilhaft angesehen, dass die Verschlussglieder, bei denen es sich um die Schiebetür 9 und die Haube 11 handelt, vertikal nach oben in eine Öffnungsrichtung verlagert werden müssen. Hierdurch kann der Wagen auch in engen Gängen abgestellt werden. Zum Öffnen und Schließen ist lediglich der ohnehin oberhalb des Wagens vorhandene Luftraum erforderlich.

Im Ausführungsbeispiel ist ein Zimmermädchenwagen dargestellt, bei dem lediglich eine Breitseite des kastenförmigen Aufbaus eine Fachöffnung aufweist. Die Erfindung lässt sich aber auch an anders gestalteten Zimmermädchenwagen realisieren, beispielsweise an einem Organisationswagen, wie er von der DE 202004003525 U1 beschrieben wird. Dort können mehrere in Vertikalrichtung verlagerbare Schiebetüren vorgesehen sein.

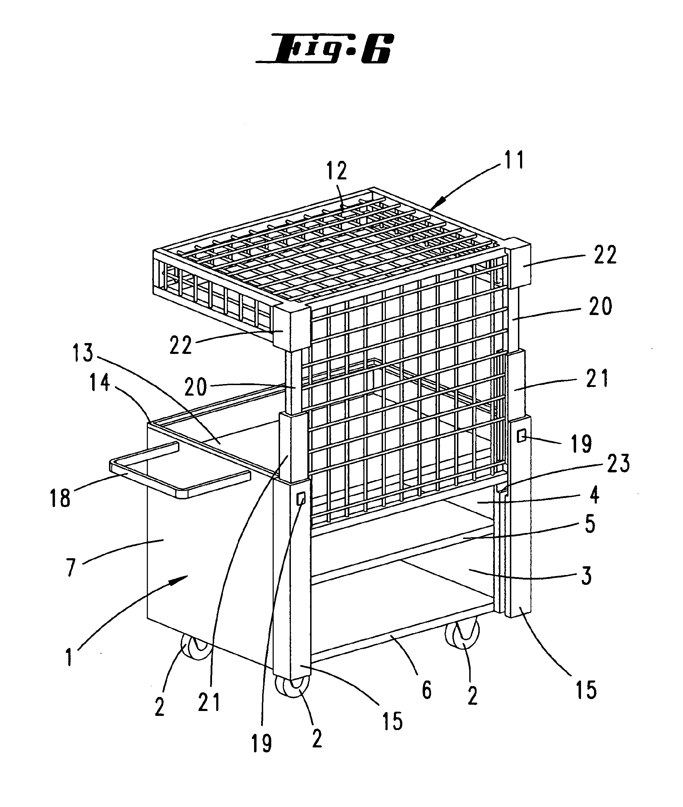

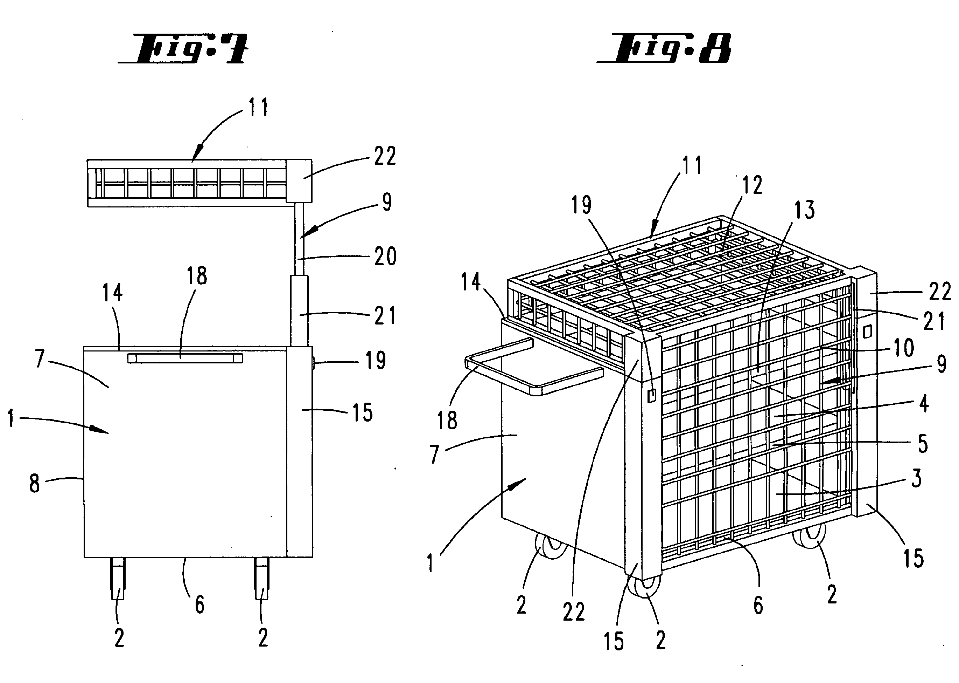

Bei dem in den Figuren 6 bis 8 dargestellten Ausführungsbeispiel ist in der Führungsnut 17 der Führungsschiene 15 eine weitere Führungsschiene 21 gelagert, die aus der Führungsschiene 15 heraus teleskopiert werden kann. In der einen im Wesentlichen U-förmigen Querschnitt aufweisenden Führungsschiene 21 steckt ein Vierkantrohr 20, welches den Rahmenschenkel für das seitliche Gitter 10 bildet. Das Vierkantrohr 20 bildet zusammen mit der Führungsschiene 21 und der Führungsschiene 15 eine Teleskopanordnung. Bei dieser Lösung kann die obere Randkante der korpusfesten Führungsschiene 15 mit der Kante der Umrandung 14 fluchten. Die Hubelemente zum Anheben der Haube 11 können somit in dem in Fig. 8 dargestellten, geschlossenen Zustand vollständig in der Führungsschiene 15 eingefahren sein. Auf der oberen Randkante der korpusfesten Führungsschiene 15 liegt dann ein Eckstück 22 auf, welches mit seiner oberen Stirnseite mit der oberen Horizontalfläche der Haube 11 bündig abschließt. Im geschlossenen Zustand gibt es somit keine vorstehenden scharfen Kanten. Im vollständig eingefahrenen Zustand liegt die untere Stirnkante der inneren Führungsschiene 21 auf einer Stufe 23 auf, die von der äußeren Führungsschiene 15 gebildet ist.

Bei dieser Lösung sind darüber hinaus nicht dargestellte mechanische Hubmittel dargestellt, die einen Kraftspeicher besitzen. Der Kraftspeicher wird beim Schließen der Haube 11 gespannt. Mittels nicht dargestellter Rastmittel wird der Kraftspeicher in der entspannten Stellung gehalten. Nach Lösen der Rastmittel, was eventuell schlüsselbetätigt erfolgen kann, entlädt sich der Kraftspeicher und wirkt damit öffnungsunterstützend. Als Kraftspeicher kann ein Federkraftspeicher, eine Gasdruckfeder oder eine Hydraulikanordnung verwendet werden.

## Patentansprüche

1. Zimmermädchenwagen mit einem von Rollen (2) getragenen kastenförmigen Aufbau (1), welcher von der Seite her in Horizontalrichtung zugängliche und mit einem Verschlusselement (9) verschließbare Fächer (3, 4) insbesondere zur Aufbewahrung von Handtüchern und Bettwäsche sowie einen von oben her in Vertikalrichtung zugänglichen Ablageboden (13) insbesondere zur Aufbewahrung von Kleinteilen wie Seife, Duschgel, Getränke etc. aufweist, **gekennzeichnet durch** ein erstes und ein zweites Verschlusselement, wobei die Fächer (3,4) mit dem ersten Verschlusselement (9) gegen Zugriff verschließbar sind und der Ablageboden (13) mit dem zweiten Verschlusselement in Form einer in Vertikalrichtung verlagerbaren Haube (11) gegen Zugriff verschließbar ist.

2. Zimmermädchenwagen nach Anspruch 1, **dadurch gekennzeichnet, dass** das erste und zweite Verschlusselement (9,11) ein Gitter (10, 12) ist.

3. Zimmermädchenwagen nach einem der vorangehenden Ansprüche, **dadurch gekennzeichnet, dass** das die Fächer verschließende erste Verschlusselement eine Schiebetür (9) ist.

4. Zimmermädchenwagen nach Anspruch 3, **dadurch gekennzeichnet, dass** die Haube (11) mit der Schiebetür (9) verbunden ist.

5. Zimmermädchenwagen nach einem der vorangehenden Ansprüche 3 oder 4, **gekennzeichnet durch** zwei in von einer Breitseitenfläche voneinander beabstandeten Ecken des kastenförmigen Aufbaus (1) angeordnete sich in Vertikalrichtung erstreckende erste Führungsschienen (15) zur Führung der Schiebetür (9) bzw. der an der Schiebetür (9) befestigten Haube (11).

6. Zimmermädchenwagen nach Anspruch 5, **dadurch gekennzeichnet, dass** zwei voneinander beabstandete und parallel zueinander verlaufende Rahmenschenkel (16) der Schiebetür (9) in einer Führung (17) der ersten Führungsschienen (15) gleitend geführt sind.

7. Zimmermädchenwagen nach einem der vorangehenden Ansprüche 3-6, **gekennzeichnet durch** einen motorischen Hubantrieb zum Anheben der Schiebetür (9) bzw. der Haube (11).

8. Zimmermädchenwagen nach einem der vorangehenden Ansprüche 3-7, **gekennzeichnet durch** eine Zeitsteuerung, die nach Ablauf einer vorbestimmten Zeit nach Betätigung eines Auslösers (19) die Schiebetür (9) bzw. die Haube (11) selbsttätig in die Verschlussstellung absenkt.

9. Zimmermädchenwagen nach einem der vorangehenden Ansprüche, wenn abhängig von Anspruch 7, **gekennzeichnet durch** ein Codeeingabetableau (19), insbesondere in Form einer Ziffertastatur zum Eingeben eines Freigabecodes, wobei der elektromotorische Antrieb nach Eingabe des richtigen Freigabecodes die Schiebetür (9) bzw. die Haube (11) in die Offenstellung anhebt.

10. Zimmermädchenwagen nach einem der Ansprüche 6 bis 9, **gekennzeichnet durch** eine in der Führung (15) geführte zweite Führungsschiene (21), die zusammen mit einem den Rahmenschenkel (16) bildenden Vierkantrohr (20) beim Öffnen des Verschlusselementes (9, 11) nach oben ausfährt.

11. Zimmermädchenwagen nach einem der Ansprüche 5 bis 10, **dadurch gekennzeichnet, dass** die erste Führungsschiene (15) mit einer Umrandung (14) bündig abschließt.

12. Zimmermädchenwagen nach einem der vorangehenden Ansprüche, wenn abhängig von Anspruch 3, **dadurch gekennzeichnet, dass** die Schiebetür (9) mit Hilfe eines Federkraftspeichers anhebbar ist, welcher beim Schließen der Schiebetür gespannt werden kann.

## Claims

1. Maid's trolley comprising a box-shaped construction (1) carried on castors (2), which construction has compartments (3, 4), in particular for storing towels and bed linen, which are horizontally accessible from the side and closable with a closing member (9), as well as a storage tray (13), in particular for storing small items such as soap, shower gel, drinks, etc., which is vertically accessible from above, the trolley being **characterised by** a first and a second closing member, the compartments (3, 4) being closable against access with the first closing member (9) and the storage tray (13) being closable against access with the second closing member which takes the form of a vertically displaceable hood (11).

2. Maid's trolley according to claim 1, **characterised in that** the first and second closing member (9, 11) is a grid (10, 12).

3. Maid's trolley according to any one of the preceding claims, **characterised in that** the first closing member which closes the compartments is a sliding door (9).

4. Maid's trolley according to claim 3, **characterised in that** the hood (11) is joined to the sliding door (9).

5. Maid's trolley according to any one of the preceding claims 3 or 4, **characterised by** two vertically extending first guide rails (15), located at corners of the box-shaped construction (1) separated from each other by a broadside face, for guiding the sliding door (9) and the hood (11) fastened to the sliding door (9).

6. Maid's trolley according to claim 5, **characterised in that** two mutually separated and mutually parallel frame pieces (16) of the sliding door (9) are guided by sliding in a guide means (17) of the first guide rails (15).

7. Maid's trolley according to any one of the preceding claims 3-6, **characterised by** a motorised lifting drive for lifting the sliding door (9) and the hood (11).

8. Maid's trolley according to any one of the preceding claims 3-7, **characterised by** a time control which automatically lowers the sliding door (9) and the hood (11) into the closed position once a predetermined length of time has passed after the operation of a release button (19).

9. Maid's trolley according to any one of the preceding claims, though dependent on claim 7, **characterised by** a code input panel (19), in particular in the form of a numerical keypad for entering a release code, the electric motor drive lifting the sliding door (9) and the hood (11) into the open position after the correct release code is entered.

10. Maid's trolley according to any one of the preceding claims 6 to 9, **characterised by** a second guide rail (21) which is guided in the guide means (15) and which, together with any one of the rectangular tubes (20) forming the frame pieces (16), extends upwards when the closing member is opened (9, 11).

11. Maid's trolley according to any one of the preceding claims 5-10, **characterised in that** the first guide rail (15) ends flush with an edge (14).

12. Maid's trolley according to any one of the preceding claims, though dependent on claim 3, **characterised in that** the sliding door (9) can be lifted with the aid of a spring energy store, which can be tensioned by closing the sliding door.

## Revendications

1. Chariot de femme de chambre offrant une structure (1) en caisson supportée par des roulettes (2), lequel présente des compartiments (3,4) verrouillables avec un élément de verrouillage (9) et accessibles par le côté dans le sens horizontal, en particulier pour le stockage de serviettes et de literie ainsi qu'un fond de stockage (13) accessible par le haut dans le sens vertical, en particulier pour le stockage de petites pièces comme du savon, du gel douche, des boissons, etc., **caractérisé par** un premier et un deuxième élément de verrouillage, dans lequel les compartiments (3,4) peuvent être verrouillés par le premier élément de verrouillage (9) pour empêcher un accès et le fond de stockage (13) peut être verrouillé pour empêcher un accès par le deuxième élément de verrouillage sous forme d'un capot (11) qui peut être posé dans le sens vertical.

2. Chariot de femme de chambre selon la revendication 1, **caractérisé en ce que** le premier et le deuxième élément de verrouillage (9,11) est une grille (10,12).

3. Chariot de femme de chambre selon l'une des revendications précédentes, **caractérisé en ce que** le premier élément de verrouillage fermant les compartiments est une porte coulissante (9).

4. Chariot de femme de chambre selon la revendication 3, **caractérisé en ce que** le capot (11) est raccordé à la porte coulissante (9).

5. Chariot de femme de chambre selon l'une des revendications précédentes 3 ou 4, **caractérisé par** deux premiers rails de guidage (15) s'étendant dans le sens vertical et agencés dans des coins de la structure en caisson (1) éloignés l'un de l'autre d'une largeur de surface latérale, servant au guidage de la porte coulissante (9) ou, selon le cas, du capot (11) fixé sur la porte coulissante (9).

6. Chariot de femme de chambre selon la revendication 5, **caractérisé en ce que** deux bois équarris (16) de la porte coulissante (9) éloignés l'un de l'autre et mutuellement parallèle sont guidés par glissement dans un guide (17) des premiers rails de guidage (15).

7. Chariot de femme de chambre selon l'une des revendications précédentes 3-6, **caractérisé par** un entraînement élévateur motorisé pour lever la porte coulissante (9) ou, selon le cas, le capot (11).

8. Chariot de femme de chambre selon l'une des revendications précédentes 3-7, **caractérisé par** une commande temporisée qui fait descendre la porte coulissante (9) ou, selon le cas, le capot (11) automatiquement en position de verrouillage et ce, après l'écoulement d'un temps prédéterminé après l'actionnement d'un déclencheur (19).

9. Chariot de femme de chambre selon l'une des revendications précédentes, pour autant qu'elles dépendent de la revendication 7, **caractérisé par** un tableau d'entrée d'un code (19), en particulier sous forme d'un clavier de chiffres pour entrer un code d'ouverture, l'entraînement par moteur électrique, après introduction du code d'ouverture correct, soulevant la porte coulissante (9) ou, selon le cas, le capot (11) en position d'ouverture.

10. Chariot de femme de chambre selon l'une des revendications 6 à 9, **caractérisé par** un deuxième rail de guidage (21) conduit dans le guide (15) qui monte vers le haut à l'ouverture de l'élément de verrouillage (9,11) conjointement avec un tube carré (20) formant le bois équarri (16).

11. Chariot de femme de chambre selon l'une des revendications 5 à 10, **caractérisé en ce que** le premier rail de guidage (15) se ferme en affleurant un bord (14).

12. Chariot de femme de chambre selon l'une des revendications précédentes, pour autant qu'elles dépendent de la revendication 3, **caractérisé en ce que** la porte coulissante (9) peut être soulevée par ressort, lequel peut être tendu lors de la fermeture de la porte coulissante.
